# EUROPÄISCHE PATENTSCHRIFT

(11) **EP 3 025 939 B1**
(45) Veröffentlichungstag und Bekanntmachung des Hinweises auf die Patenterteilung: **17.07.2019**
(21) Anmeldenummer: 15002587.2
(22) Anmeldetag: 02.09.2015
(51) Int. Cl.: B62D 35/00, B60K 15/063, B60K 13/04

(54) **ZUGMASCHINE MIT ZWEI SEITLICHEN WINDABWEISERN UND DAZWISCHENLIEGENDEM FLUIDTANK**
TRACTOR, COMPRISING TWO SIDE WIND DEFLECTORS AND A FLUID TANK BETWEEN THEM
MACHINE DE TRACTION DOTEE DE DEUX DEFLECTEURS DE VENT LATERAUX ET RESERVOIR DE FLUIDE INTERMEDIAIRE

(30) Priorität: 29.11.2014 DE 102014017732
(43) Veröffentlichungstag der Anmeldung: 01.06.2016
(73) Patentinhaber: MAN Truck & Bus SE, 80995 München (DE)
(72) Erfinder: Scherr, Stefan, 85221 Dachau (DE)
(74) Vertreter: v. Bezold & Partner Patentanwälte - PartG mbB

(56) Entgegenhaltungen:
- EP-A1- 2 116 702
- DE-A1- 3 737 380
- US-A1- 2014 061 266
- US-A1- 2014 069 972

## Beschreibung

Die Erfindung betrifft eine Zugmaschine, die zum Ankoppeln eines Anhängers (Trailers) ausgeführt ist, vorzugsweise eine Sattelzugmaschine und/oder ein Nutzfahrzeug, insbesondere einen Lastkraftwagen.

US 2014/0061266 A1 offenbart eine Zugmaschine mit Tanks, die in einer hinteren Einhausung untergebracht sind und sich über die Breite der Zugmaschine erstrecken. Ferner können zum Stand der Technik die US 2014/069972 A1, die DE 37 37 380 A1 und die EP 2 116 702 A1 genannt werden.

Zugmaschinen zum Ankoppeln eines Anhängers, insbesondere sogenannte Sattelzugmaschinen zum Ankoppeln eins Sattelanhängers, umfassen üblicherweise Verbrennungsmotoren und benötigen deshalb Kraftstofftanks zur Aufnahme des Kraftstoffs. Zur Abgasreinigung werden Katalysatoren, meist sogenannte SCR-Katalysatoren (SCR: Selective Catalytic Reduction), und ebenfalls in Tanks untergebrachte Harnstoff-Wasser-Lösungen eingesetzt. Die Kraftstofftanks und die Tanks für die Harnstoff-Wasser-Lösung sind üblicherweise am Fahrgestell, zum Beispiel dem Leiterrahmen, der Zugmaschine montiert. Um eine möglichst große Reichweite der Zugmaschinen zu erreichen, sollten die Kraftstofftanks ein möglichst großes Aufnahmevolumen aufweisen. Der Bauraum am Fahrgestell ist allerdings begrenzt, so dass das Aufnahmevolumen der Kraftstofftanks ebenfalls begrenzt ist.

Eine Aufgabe der Erfindung ist es, eine Zugmaschine, insbesondere eine Sattelzugmaschine und/oder ein Nutzfahrzeug, zu schaffen, mittels der das Aufnahmevolumen eines Kraftstofftanks und somit die Reichweite der Zugmaschine vergrößert werden kann.

Diese Aufgabe wird mit den Merkmalen des unabhängigen Anspruchs gelöst. Vorteilhafte Weiterbildungen der Erfindung können den Unteransprüchen und der folgenden Beschreibung bevorzugter Ausführungsformen der Erfindung entnommen werden.

Die Erfindung schafft ein Kraftfahrzeug, nämlich eine Zugmaschine zum Ankoppeln eines Anhängers (Trailers), vorzugsweise eine Sattelzugmaschine und/oder ein Nutzfahrzeug.

Die Zugmaschine umfasst ein Fahrerhaus, das eine Fahrerhaus-Rückwand und zweckmäßig zwei Fahrerhaus-Seitenwände aufweist. Die Zugmaschine umfasst außerdem zwei seitliche, fahrerhausfeste Windabweiser (zweckmäßig sogenannte Sideflaps), die vorzugsweise relativ zur Fahrerhaus-Rückwand (in Längsrichtung der Zugmaschine) nach hinten abstehen und/oder Verlängerungen der Fahrerhaus-Seitenwände darstellen.

Die Windabweiser dienen zweckmäßig der Reduzierung des Luftwiderstands und/oder zum zumindest teilweisen seitlichen Abdecken des Raums zwischen der Fahrerhaus-Rückwand und einer Anhänger-Vorderseite.

Die Windabweiser können unmittelbar oder mittelbar, zum Beispiel über eine Befestigungskonstruktion, am Fahrerhaus festgelegt sein.

Die Windabweiser sind vorzugsweise im Wesentlichen bündig zu den Fahrerhaus-Seitenwänden angeordnet.

Die Windabweiser können sich im Wesentlichen parallel zu den Fahrerhaus-Seitenwänden erstrecken oder relativ zu den Fahrerhaus-Seitenwänden schräg nach hinten absehen.

Die Zugmaschine zeichnet sich insbesondere dadurch aus, dass (in Breitenrichtung der Zugmaschine) zwischen den zwei Windabweisern zumindest ein Fluidtank zur Aufnahme eines Fluides angeordnet ist. Der Fluidtank ist folglich zumindest abschnittsweise im Raum, der insbesondere durch die Fahrerhaus-Rückwand (zweckmäßig vordere Begrenzung) und die Windabweiser (zweckmäßig seitliche Begrenzung) begrenzt wird, angeordnet. Der Raum wird ferner vorzugsweise durch einen optionalen Dachspoiler (zweckmäßig obere Begrenzung) und den Schwenkradius einen Anhängers (zweckmäßig hintere Begrenzung) begrenzt.

Derartige Fluidtanks sind üblicherweise am Fahrgestell, zum Beispiel an Längs- und/oder Querträgern der Zugmaschine, montiert, und begrenzen somit den Bauraum für den Kraftstofftank. Dadurch, dass der Fluidtank im Rahmen der Erfindung vom Fahrgestell entfernt und zweckmäßig an der Fahrerhaus-Rückwand zwischen den zwei Windabweisern montiert wird, kann der dadurch frei werdende Bauraum genutzt werden, um das Aufnahmevolumen des Kraftfahrzeugtanks zu vergrößern, zum Beispiel auf über 1000 Liter, 1100L, 1200L, 1300L oder sogar auf über 1400 Liter, bis hin zu 1500 Liter.

Der Fluidtank ist vorzugsweise (in Längsrichtung der Zugmaschine) hinter der Fahrerhaus-Rückwand angeordnet und/oder mittelbar oder unmittelbar an der Fahrerhaus-Rückwand montiert. Alternativ oder ergänzend erstreckt sich der Fluidtank entlang der Fahrerhaus-Rückwand, vorzugsweise im Wesentlichen vertikal.

Der Fluidtank ist vorzugsweise ein Reduktionsmitteltank zur Aufnahme eines Reduktionsmittels, vorzugsweise ein Harnstoff-Wasser-Tank zur Aufnahme einer Harnstoff-Wasser-Lösung, zum Beispiel sogenanntem AdBlue. Der Fluidtank könnte allerdings auch ein Öltank, etc. sein.

Es ist möglich, dass der Fluidtank mittels einer Befestigungskonstruktion (zum Beispiel eine Schraubverbindung, Schweißverbindung, Klebeverbindung, Clip-Verbindung und/oder Profil-Verbindung, etc.) an das Fahrerhaus montiert ist.

Der dem Fluidtank benachbarte Windabweiser, also der Windabweiser, der sich auf der gleichen Seite wie der Fluidtank befindet, kann mittels einer Haltekonstruktion (zum Beispiel eine Schraubverbindung, Schweißverbindung, Klebeverbindung, Clip-Verbindung und/oder Profil-Verbindung, etc.) an das Fahrerhaus montiert sein.

Es ist möglich, dass einer der Windabweiser und der Fluidtank aneinander montiert sind. Alternativ oder ergänzend kann zumindest der dem Fluidtank benachbarte Windabweiser, also der Windabweiser, der sich auf der gleichen Seite wie der Fluidtank befindet, mittels einer Festlegkonstruktion (zum Beispiel eine Schraubverbindung, Schweißverbindung, Klebeverbindung, Clip-Verbindung und/oder Profil-Verbindung, etc.) an den Fluidtank montiert sein, vorzugsweise so, dass der Windabweiser über den Fluidtank fahrerhausfest gehalten wird.

Im Rahmen der Erfindung ist es somit zweckmäßig möglich, dass der dem Fluidtank benachbarte Windabweiser und der Fluidtank unabhängig voneinander fahrerhausfest montierbar sind, vorzugsweise ohne dass der Windabweiser an dem Fluidtank montiert ist und/oder mittels eigenen Befestigungs- und Haltekonstruktionen.

Es ist allerdings ebenfalls zweckmäßig möglich, dass der dem Fluidtank benachbarte Windabweiser am Fluidtank montiert ist und somit über den Fluidtank fahrerhausfest gehalten wird, zum Beispiel mit oder ohne dass der Windabweiser direkt am Fahrerhaus zu montieren ist.

Es ist möglich, dass der Fluidtank und einer der Windabweiser eine Baueinheit (Zusammenbau) bilden. Die Baueinheit kann vorzugsweise mittels einer Festmachkonstruktion (zum Beispiel eine Schraubverbindung, Schweißverbindung, Klebeverbindung, Clip-Verbindung und/oder Profil-Verbindung, etc.) an das Fahrerhaus montiert sein.

Es ist möglich, dass das Fahrerhaus eine Fahrerhaus-Karosserie umfasst, die in Längsrichtung der Zugmaschine relativ zur Fahrerhaus-Rückwand nach hinten absteht und zumindest einen Teil des Fluidtanks bildet. Die Fahrerhaus-Karosserie kann die Fahrerhaus-Rückwand und/oder eine Fahrerhaus-Seitenwand umfassen. Die jeweilige Fahrerhaus-Karosserie kann zum Beispiel im Wesentlichen parallel und/oder im Wesentlich fluchtend zur Fahrerhaus-Seitenwand nach hinten abstehen oder schräg dazu.

Es ist möglich, dass ein Seitenabschnitt, zum Beispiel eine Seitenwand, des Fluidtanks zugleich zumindest einen Teil eines der Windabweiser bildet. Der Fluidtank kann somit vorzugsweise selbst abschnittsweise als seitlicher Windabweiser wirken.

Es ist möglich, dass die Windabweiser und der Fluidtank (in Längsrichtung der Zugmaschine) vor einem Schwenkradius eines Anhängers für die Zugmaschine und/oder (in Höhenrichtung der Zugmaschine) unter einem Dachspoiler der Zugmaschine angeordnet sind.

Insbesondere können die Windabweiser und der Fluidtank (in Längsrichtung der Zugmaschine) zwischen der Fahrerhaus-Rückwand und einer Anhänger-Vorderseite angeordnet sein.

Die Längserstreckung des Fluidtanks kann vorzugsweise zumindest 70%, 80% oder zumindest 90% der Höhe der Fahrerhaus-Rückwand betragen. Der Fluidtank kann sich hierbei im Wesentlichen vertikal, im Wesentlichen horizontal oder schräg erstrecken, allerdings zum Beispiel auch plattenförmig ausgeführt sein.

Der Fluidtank ist ausschließlich im seitlichen Randbereich der Fahrerhaus-Rückwand und/oder des Anhänger-Schwenkradius angeordnet, also zweckmäßig dort, wo der Anhänger-Schwenkradius den größten Bauraum zulässt.

Zu erwähnen ist, dass im Rahmen der Erfindung die Zugmaschine ein Kraftfahrzeug darstellt und somit zweckmäßig ein durch einen Motor angetriebenes und/oder nicht an Schienen gebundenes Kraftfahrzeug, insbesondere eine Sattelzugmaschine und/oder ein Nutzfahrzeug, zum Beispiel einen Lastkraftwagen.

Zu erwähnen ist außerdem, dass der Kraftstofftank der Zugmaschine vorzugsweise ein Dieseltank ist.

Zu erwähnen ist noch, dass die zuvor erwähnten Profil-Verbindungen zum Beispiel einen Rahmen, Winkel oder eine andere Halterung umfassen können.

Zu erwähnen ist darüber hinaus, dass die Windabweiser, insbesondere der dem Fluidtank benachbarte Windabweiser, und/oder der Fluidtank über die jeweilige Konstruktion vorzugsweise an die Fahrerhaus-Rückwand montiert sind.

Die Erfindung ist nicht auf eine Zugmaschine beschränkt, sondern umfasst auch eine Fahrzeugkombination mit einer Zugmaschine, wie hierin beschrieben, und einem daran ankoppelbaren Anhänger. Die Zugmaschine ist vorzugsweise eine Sattelzugmaschine, während der Anhänger vorzugsweise ein Sattelanhänger ist.

Die zuvor beschriebenen Ausführungsformen und Merkmale der Erfindung sind miteinander kombinierbar. Andere Vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt einen Teil einer Zugmaschine von hinten links gemäß einer Ausführungsform der Erfindung,
- Figur 2: zeigt einen Detailausschnitt einer Zugmaschine gemäß einer Ausführungsform der Erfindung,
- Figur 3: zeigt einen Detailausschnitt einer Zugmaschine gemäß einer anderen Ausführungsform der Erfindung,
- Figur 4: zeigt einen Detailausschnitt einer Zugmaschine gemäß einer noch anderen Ausführungsform der Erfindung,
- Figur 5: zeigt einen Detailausschnitt einer Zugmaschine gemäß einer wiederum anderen Ausführungsform der Erfindung, und
- Figur 6: zeigt eine schematische Seitenansicht einer Fahrzeugkombination mit einer Zugmaschine gemäß einer Ausführungsform der Erfindung.

Die unter Bezugnahme auf die Figuren beschriebenen Ausführungsformen stimmen teilweise überein, so dass ähnliche oder identische Teile mit den gleichen Bezugszeichen versehen sind, und zu deren Erläuterung auch auf die Beschreibung der anderen Ausführungsformen verwiesen wird, um Wiederholungen zu vermeiden.

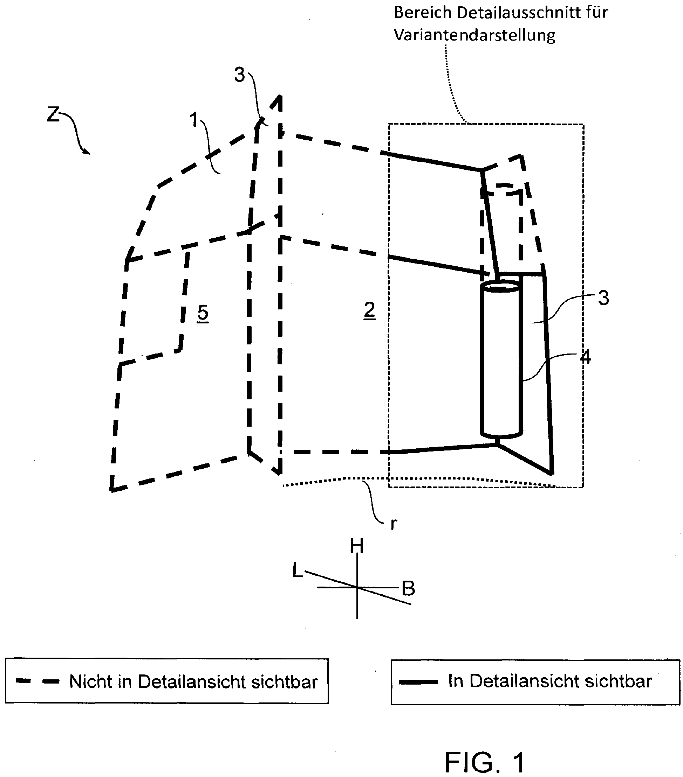

Figur 1 zeigt schematisch einen Teil einer Zugmaschine Z zum Ankoppeln eines nicht dargestellten Anhängers von hinten links.

Die Zugmaschine Z ist eine Sattelzugmaschine und somit ein nicht-schienengebundenes Kraftfahrzeug. Die Zugmaschine Z umfasst.ein nicht dargestelltes Fahrgestell (zum Beispiel Längs- und Querträger, Untergestell, Gitter- oder Leiterrahmen, etc.) und ein Fahrerhaus 1, das eine Fahrerhaus-Rückwand 2 und zwei Fahrerhaus-Seitenwände 5 aufweist. Die Zugmaschine Z, insbesondere das Fahrerhaus 1, ist mit zwei seitlichen, zweckmäßig fahrerhausfesten Windabweisern 3 versehen, die in Längsrichtung L der Zugmaschine Z relativ zur Fahrerhaus-Rückwand 2 schräg nach hinten abstehen und alternativ oder ergänzend Verlängerungen der Fahrerhaus-Seitenwände 5 bilden. Bezugszeichen B kennzeichnet die Breitenrichtung der Zugmaschine Z, während Bezugszeichen H die Höhenrichtung kennzeichnet.

In Längsrichtung L der Zugmaschine Z hinter der Fahrerhaus-Rückwand 2 und in Breitenrichtung B der Zugmaschine Z zwischen den zwei Windabweisern 3 ist ein Fluidtank 4 zur Aufnahme eines Fluides angeordnet. Der Fluidtank 4 ist folglich nicht am Fahrgestell der Zugmaschine Z montiert, sondern mittelbar oder unmittelbar am Fahrerhaus 1, vorzugsweise an dessen Rückwand 2. Der Reduktionsmitteltank ist vorzugsweise ein Harnstoff-Wasser-Tank zur Aufnahme einer Harnstoff-Wasser-Lösung, zum Beispiel sogenanntem AdBlue.

Der Fluidtank 4 ist ausschließlich im seitlichen Randbereich der Fahrerhaus-Rückwand 2 und des Anhänger-Schwenkradius r angeordnet und erstreckt sich über nahezu die gesamte Höhe der Fahrerhaus-Rückwand 2.

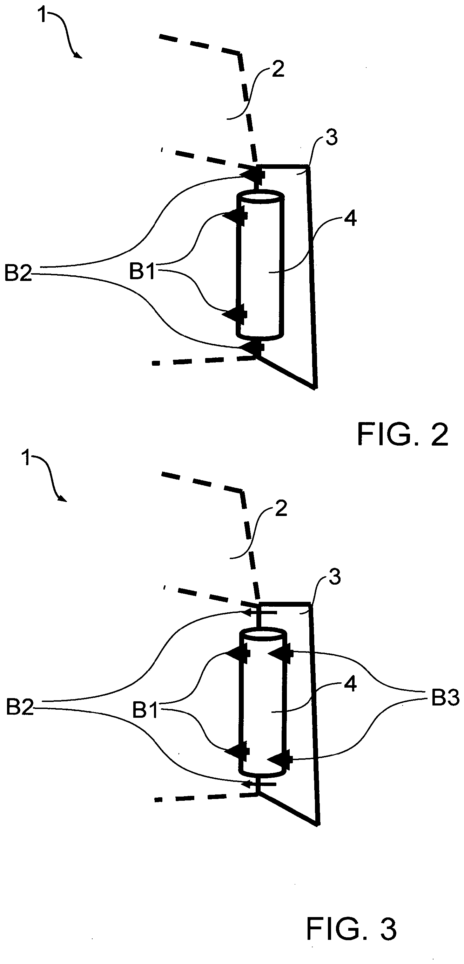

Figur 2 zeigt einen Detailausschnitt einer Zugmaschine Z gemäß einer Ausführungsform der Erfindung.

Eine Besonderheit der in Figur 2 gezeigten Ausführungsform ist, dass der Fluidtank 4 mittels einer Befestigungskonstruktion B1 am Fahrerhaus 1 montiert ist und der dem Fluidtank 4 benachbarte Windabweiser 3 mittels einer Haltekonstruktion B2 an das Fahrerhaus 1, allerdings nicht an den Fluidtank 4, montiert ist. Der Fluidtank 4 und der Windabweiser 3 sind folglich unabhängig voneinander am Fahrerhaus 1 montierbar und gegebenenfalls demontierbar.

Figur 3 zeigt einen Detailausschnitt einer Zugmaschine Z gemäß einer anderen Ausführungsform der Erfindung.

Eine Besonderheit der in Figur 3 gezeigten Ausführungsform ist, dass der Fluidtank 4 mittels einer Befestigungskonstruktion B1 an das Fahrerhaus 1 montiert ist und der dem Fluidtank 4 benachbarte Windabweiser 3 mittels einer Festlegkonstruktion B3 an den Fluidtank 4 montiert ist, zweckmäßig so, dass der Windabweiser 3 über den Fluidtank 4 fahrerhausfest gehalten wird. Zusätzlich kann der Windabweiser 3 ähnlich wie in Figur 2 optional über die Haltekonstruktion B2 an das Fahrerhaus 2 montiert sein.

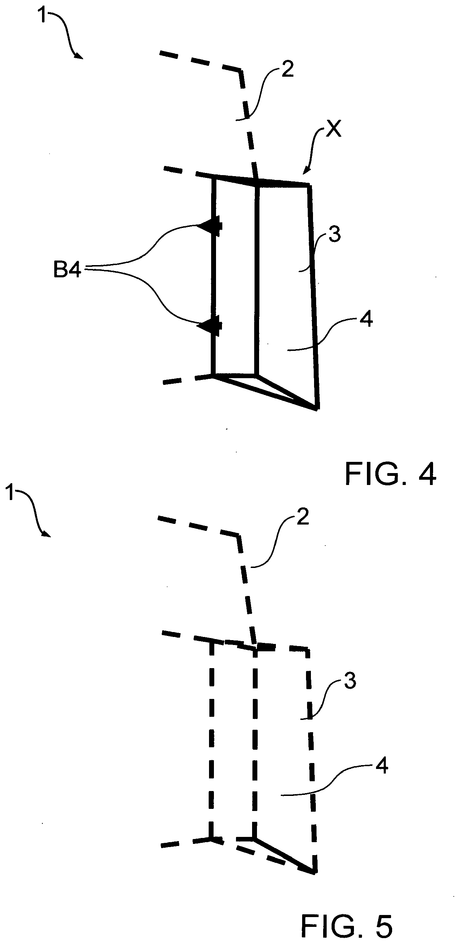

Figur 4 zeigt einen Detailausschnitt einer Zugmaschine Z gemäß einer anderen Ausführungsform der Erfindung.

Eine Besonderheit der in Figur 4 gezeigten Ausführungsform ist, dass der Fluidtank 4 und einer der Windabweiser 3 eine Baueinheit X bilden. Die Baueinheit X ist zweckmäßig mittels einer Festmachkonstruktion B4 an das Fahrerhaus 1 montiert.

Figur 5 zeigt einen Detailausschnitt einer Zugmaschine Z gemäß einer anderen Ausführungsform der Erfindung.

Eine Besonderheit der in Figur 5 gezeigten Ausführungsform ist, dass das Fahrerhaus 1 eine Fahrerhaus-Karosserie umfasst, die in Längsrichtung L der Zugmaschine Z relativ zur Fahrerhaus-Rückwand 2 nach hinten absteht und zumindest einen Teil des Fluidtanks 4 und zweckmäßig eines der Windabweiser 3 bildet.

Bei den in den Figuren 4 und 5 gezeigten Ausführungsformen bildet ein Seitenabschnitt des Fluidtanks 4 zugleich zumindest einen Teil des dem Fluidtank 4 benachbarten Windabweisers 3.

Im Rahmen der Erfindung kann also ein Teil des Fluidtanks 4 funktionaler Bestandteil eines der Windabweiser 3 sein bzw. umgekehrt, ein Teil eines der Windabweiser 3 funktionaler Bestandteil des Fluidtanks 4.

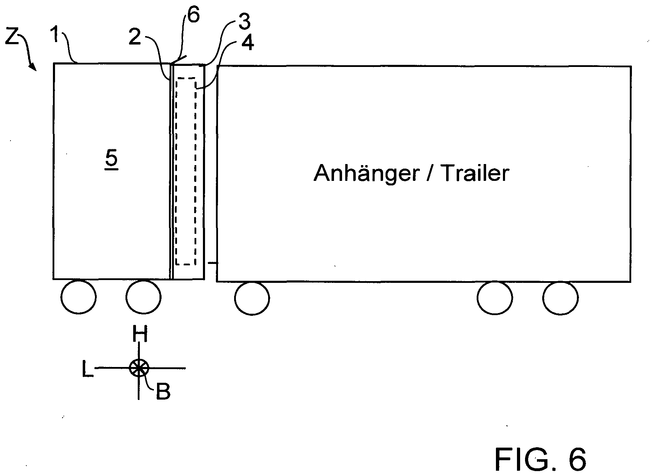

Figur 6 zeigt eine Seitenansicht einer Fahrzeugkombination mit einer Zugmaschine Z gemäß einer Ausführungsform der Erfindung und einem daran angekoppelten Anhänger (Trailer). Die Zugmaschine Z ist vorzugsweise eine Sattelzugmaschine, während der Anhänger vorzugsweise ein Sattelanhänger-/Auflieger ist.

Figur 6 in Zusammenschau mit Figur 1 kann insbesondere entnommen werden, dass die Windabweiser 3 und der Fluidtank 4 im (Bau-) Raum angeordnet sind, der durch folgendes definiert wird: Schwenkradius r des Anhängers (hinten), Fahrerhaus-Rückwand 2 (vorne), Windabweiser 3 (seitlich), Dachspoiler 6 (oben).

Die Erfindung ist nicht auf die oben beschriebenen bevorzugten Ausführungsformen beschränkt. Vielmehr ist eine Vielzahl von Varianten und Abwandlungen möglich, die in den durch die Patentansprüche definierten Schutzbereich fallen.

### Bezugszeichenliste

- Z: Zugmaschine
- 1: Fahrerhaus
- 2: Fahrerhaus-Rückwand
- 3: Windabweiser
- 4: Fluidtank
- 5: Fahrerhaus-Seitenwände
- 6: Dachspoiler
- r: Anhänger-Schwenkradius
- X: Baueinheit
- B1: Befestigungskonstruktion (Fluidtank an Fahrerhaus)
- B2: Haltekonstruktion (Windabweiser an Fahrerhaus)
- B3: Festlegkonstruktion (Windabweiser an Fluidtank)
- B4: Festmachkonstruktion (Baueinheit an Fahrerhaus)
- B: Breitenrichtung der Zugmaschine
- L: Längsrichtung der Zugmaschine
- H: Höhenrichtung der Zugmaschine

## Patentansprüche

1. Zugmaschine (Z) zum Ankoppeln eines Anhängers, vorzugsweise Sattelzugmaschine und/oder Nutzfahrzeug, mit:
- einem Fahrerhaus (1), das eine Fahrerhaus-Rückwand (2) aufweist, und
- zwei seitlichen, fahrerhausfesten Windabweisern (3), die relativ zur Fahrerhaus-Rückwand (2) nach hinten abstehen,
wobei
- zwischen den zwei Windabweisern (3) zumindest ein Fluidtank (4) zur Aufnahme eines Fluids angeordnet ist,
**dadurch gekennzeichnet, dass**
- der dem Fluidtank (4) benachbarte Windabweiser (3) mittels einer Festlegkonstruktion (B3) an den Fluidtank (4) montiert ist, so dass er über den Fluidtank (4) fahrerhausfest gehalten wird und/oder ohne selbst am Fahrerhaus (1) montiert zu sein, und der Fluidtank (4) ausschließlich im seitlichen Randbereich der Fahrerhaus-Rückwand (2) und/oder des Anhänger-Schwenkradius (r) angeordnet ist, und/oder
- ein Seitenabschnitt des Fluidtanks (4) zumindest einen Teil eines der Windabweiser (3) bildet und der Fluidtank (4) somit abschnittsweise selbst als seitlicher Windabweiser wirkt, und der Fluidtank (4) ausschließlich im seitlichen Randbereich der Fahrerhaus-Rückwand (2) und/oder des Anhänger-Schwenkradius (r) angeordnet ist.

2. Zugmaschine (Z) nach Anspruch 1, **dadurch gekennzeichnet, dass** der Fluidtank (4) ein Reduktionsmitteltank zur Aufnahme eines Reduktionsmittels ist und/oder ein Harnstoff-Wasser-Tank zur Aufnahme von Harnstoff-Wasser ist.

3. Zugmaschine (Z) nach Anspruch 1 oder 2, **dadurch gekennzeichnet, dass** der Fluidtank hinter der Fahrerhaus-Rückwand (2) angeordnet ist, durch die Fahrerhaus-Rückwand (2) getragen wird und/oder sich entlang der Fahrerhaus-Rückwand (2) zweckmäßig vertikal erstreckt.

4. Zugmaschine (Z) nach einem der vorhergehenden Ansprüche, **dadurch gekennzeichnet, dass** der Fluidtank (4) mittels einer Befestigungskonstruktion (B1) an das Fahrerhaus (1) montiert ist.

5. Zugmaschine (Z) nach einem der vorhergehenden Ansprüche, **dadurch gekennzeichnet, dass** der dem Fluidtank (4) benachbarte Windabweiser (3) mittels einer Haltekonstruktion (B2) an das Fahrerhaus (1) montiert ist.

6. Zugmaschine (Z) nach einem der vorhergehenden Ansprüche, **dadurch gekennzeichnet, dass** einer der Windabweiser (3) und der Fluidtank (4) aneinander montiert sind.

7. Zugmaschine (Z) nach einem der vorhergehenden Ansprüche, **dadurch gekennzeichnet, dass** der Fluidtank (4) und einer der Windabweiser (3) eine Baueinheit (X) bilden, wobei die Baueinheit (X) vorzugsweise mittels einer Festmachkonstruktion (B4) an das Fahrerhaus (1) montiert ist.

8. Zugmaschine (Z) nach einem der vorhergehenden Ansprüche, **dadurch gekennzeichnet, dass** das Fahrerhaus (1) eine Fahrerhaus-Karosserie umfasst, die relativ zur Fahrerhaus-Rückwand (2) nach hinten absteht und zumindest einen Teil des Fluidtanks (4) bildet.

9. Zugmaschine (Z) nach einem der vorhergehenden Ansprüche, **dadurch gekennzeichnet, dass**
- die Windabweiser (3) und der Fluidtank (4) vor dem Schwenkradius (r) eines Anhängers zum Anhängen an die Zugmaschine (1) und/oder unter einem Dachspoiler (6) der Zugmaschine (1) angeordnet sind, und/oder
- die Windabweiser (3) und der Fluidtank (4) zwischen der Fahrerhaus-Rückwand (2) und einer Anhänger-Vorderseite angeordnet sind.

10. Zugmaschine (Z) nach einem der vorhergehenden Ansprüche, **dadurch gekennzeichnet, dass** die Länge des Fluidtanks (4) zumindest 70%, 80% oder 90% der Höhe der Fahrerhaus-Rückwand (2) beträgt.

11. Fahrzeugkombination, mit einer Zugmaschine (Z) nach einem der vorhergehenden Ansprüche und einem daran ankoppelbaren Anhänger.

## Claims

1. A tractor (Z) for coupling of a trailer, preferably a semitrailer tractor and/or truck, with
- a driver's cab (1) having a driver's cab rear wall (2), and
- two side wind deflectors (3) which are fixed to the driver's cab and protrude to the rear relative to the driver's cab rear wall (2),
wherein
- at least one fluid tank (4) for receiving a fluid is arranged between the two wind deflectors (3),
**characterized in that**
- the wind deflector (3) adjacent to the fluid tank (4) is mounted on the fluid tank (4) by means of a fastening structure (B3), such that it is held fixed to the driver's cab via the fluid tank (4) and/or without itself being mounted on the driver's cab (1), and the fluid tank (4) is arranged exclusively in the side edge region of the driver's cab rear wall (2) and/or the trailer pivot radius (r), and/or
- a side portion of the fluid tank (4) forms at least part of one of the wind deflectors (3), and the fluid tank (4) thus itself acts as the side wind deflector at least in portions, and the fluid tank (4) is arranged exclusively in the side edge region of the driver's cab rear wall (2) and/or the trailer pivot radius (r).

2. The tractor (Z) according to Claim 1, **characterized in that** the fluid tank (4) is a reducing agent tank for receiving a reducing agent and/or a urea-water tank for receiving urea-water.

3. The tractor (Z) according to Claim 1 or 2, **characterized in that** the fluid tank is arranged behind the driver's cab rear wall (2), is carried by the driver's rear wall (2) and/or suitably extends vertically along the driver's cab rear wall (2).

4. The tractor (Z) according to any of the preceding claims, **characterized in that** the fluid tank (4) is mounted on the driver's cab (1) by means of a fixing structure (B1).

5. The tractor (Z) according to any of the preceding claims, **characterized in that** the wind deflector (3) adjacent to the fluid tank (4) is mounted on the driver's cab (1) by means of a holding structure (B2).

6. The tractor (Z) according to any of the preceding claims, **characterized in that** one of the wind deflectors (3) and the fluid tank (4) are mounted on each other.

7. The tractor (Z) according to any of the preceding claims, **characterized in that** the fluid tank (4) and one of the wind deflectors (3) form a structural unit (X), wherein the structural unit (X) is preferably mounted on the driver's cab (1) by means of a securing structure (B4).

8. The tractor (Z) according to any of the preceding claims, **characterized in that** the driver's cab (1) comprises a driver's cab bodywork which protrudes to the rear relative to the driver's cab rear wall (2) and forms at least part of the fluid tank (4).

9. The tractor (Z) according to any of the preceding claims, **characterized in that**
- the wind deflectors (3) and the fluid tank (4) are arranged in front of the pivot radius (r) of a trailer for coupling to the tractor (1), and/or below a roof spoiler (6) of the tractor (1), and/or
- the wind deflectors (3) and the fluid tank (4) are arranged between the driver's cab rear wall (2) and a trailer front side.

10. The tractor (Z) according to any of the preceding claims, **characterized in that** the length of the fluid tank (4) is at least 70%, 80% or 90% of the height of the driver's cab rear wall (2).

11. A vehicle combination with a tractor (Z) according to any of the preceding claims and trailer which can be coupled thereto.

## Revendications

1. Machine de traction (Z) pour l'accouplement d'une remorque, de préférence tracteur de semi-remorque et/ou véhicule utilitaire, comprenant :
- une cabine de conducteur (1) qui présente une paroi arrière de cabine de conducteur (2), et
- deux déflecteurs de vent (3) latéraux fixés à la cabine de conducteur, qui dépassent vers l'arrière par rapport à la paroi arrière de cabine de conducteur (2),
- au moins un réservoir de fluide (4) pour recevoir un fluide étant disposé entre les deux déflecteurs de vent,
**caractérisée en ce que**
- le déflecteur de vent (3) adjacent au réservoir de fluide (4) est monté sur le réservoir de fluide (4) au moyen d'une construction de blocage (B3), de telle sorte qu'il soit retenu par le biais du réservoir de fluide (4) de manière fixée à la cabine de conducteur et/ou sans être monté lui-même sur la cabine de conducteur (1), et le réservoir de fluide (4) étant disposé exclusivement dans la région de bord latérale de la paroi arrière de cabine de conducteur (2) et/ou du rayon de pivotement de la remorque (r), et/ou
- une portion latérale du réservoir de fluide (4) forme au moins une partie d'un des déflecteurs de vent (3) et le réservoir de fluide (4) agit ainsi en partie lui-même en tant que déflecteur de vent latéral et le réservoir de fluide (4) est disposé exclusivement dans la région de bord latérale de la paroi arrière de cabine de conducteur (2) et/ou du rayon de pivotement (r) de la remorque.

2. Machine de traction (Z) selon la revendication 1, **caractérisée en ce que** le réservoir de fluide (4) est un réservoir d'agent réducteur pour recevoir un agent réducteur et/ou un réservoir d'urée et d'eau pour recevoir de l'urée et de l'eau.

3. Machine de traction (Z) selon la revendication 1 ou 2, **caractérisée en ce que** le réservoir de fluide est disposé derrière la paroi arrière de cabine de conducteur (2), est porté par la paroi arrière de cabine de conducteur (2) et/ou s'étend de manière judicieuse verticalement le long de la paroi arrière de cabine de conducteur (2).

4. Machine de traction (Z) selon l'une quelconque des revendications précédentes, **caractérisée en ce que** le réservoir de fluide (4) est monté sur la cabine de conducteur (1) au moyen d'une construction de fixation (B1).

5. Machine de traction (Z) selon l'une quelconque des revendications précédentes, **caractérisée en ce que** le déflecteur de vent (3) adjacent au réservoir de fluide (4) est monté sur la cabine de conducteur (1) au moyen d'une construction de retenue (B2).

6. Machine de traction (Z) selon l'une quelconque des revendications précédentes, **caractérisée en ce que** l'un des déflecteurs de vent (3) et le réservoir de fluide (4) sont montés l'un contre l'autre.

7. Machine de traction (Z) selon l'une quelconque des revendications précédentes, **caractérisée en ce que** le réservoir de fluide (4) et l'un des déflecteurs de vent (3) forment une unité structurelle (X), l'unité structurelle (X) étant de préférence montée sur la cabine de conducteur (1) au moyen d'une construction de solidarisation (B4).

8. Machine de traction (Z) selon l'une quelconque des revendications précédentes, **caractérisée en ce que** la cabine de conducteur (1) comprend une carrosserie de cabine de conducteur qui fait saillie vers l'arrière par rapport à la paroi arrière de cabine de conducteur (2) et qui forme au moins une partie du réservoir de fluide (4).

9. Machine de traction (Z) selon l'une quelconque des revendications précédentes, **caractérisée en ce que**
- les déflecteurs de vent (3) et le réservoir de fluide (4) sont disposés avant le rayon de pivotement (r) d'une remorque destinée à être attelée à la machine de traction (1) et/ou sous un spoiler de toit (6) de la machine de traction (1), et/ou
- les déflecteurs de vent (3) et le réservoir de fluide (4) sont disposés entre la paroi arrière de cabine de conducteur (2) et un côté avant de la remorque.

10. Machine traction (Z) selon l'une quelconque des revendications précédentes, **caractérisée en ce que** la longueur du réservoir de fluide (4) représente au moins 70 %, 80 % ou 90 % de la hauteur de la paroi arrière de cabine de conducteur (2).

11. Combinaison de véhicules, comprenant une machine de traction (Z) selon l'une quelconque des revendications précédentes et une remorque pouvant être attelée à celle-ci.
